# EUROPÄISCHE PATENTSCHRIFT

(11) **EP 0 902 266 B1**
(45) Veröffentlichungstag und Bekanntmachung des Hinweises auf die Patenterteilung: **03.03.2004**
(21) Anmeldenummer: 98116890.9
(22) Anmeldetag: 07.09.1998
(51) Int. Cl.: G01L 5/06

(54) **Vorrichtung zum Erfassen der Bandspannung eines Gurtbandes, insbesondere Zurrgurtes**
Device for measuring the tension in a belt, in particular a lashing strap
Dispositif de mesure de la tension d'une sangle, en particulier d'une sangle d'amarrage

(30) Priorität: 10.09.1997 DE 19739667
(43) Veröffentlichungstag der Anmeldung: 17.03.1999
(73) Patentinhaber: Dolezych, Susanne, 58313 Herdecke (DE)
(72) Erfinder: Dolezych, Susanne, 58313 Herdecke (DE); Schöbel, Uwe, Dipl.-Ing., 44319 Dortmund (DE)
(74) Vertreter: Honke, Manfred, Dr.-Ing.

(56) Entgegenhaltungen:
- DE-A- 4 036 049
- DE-A- 4 100 245

## Beschreibung

Die Erfindung betrifft eine Vorrichtung zum Erfassen der Bandspannung eines Gurtbandes, insbesondere Zurrgurtes, mit einem Basisgehäuse mit quer zur Gehäuselängsachse angeordneten Führungen für das Gurtband, wobei zwischen zwei ortsfesten Führungen eine mittels zumindest einer Feder elastisch abgestützte Führung vorgesehen ist, und wobei im Zuge der Messung der Bandspannung das mit seiner Flachseite wechselweise gegen die Führungen anliegende Gurtband auf der federelastischen Führung aus seinem gestreckten Verlauf in eine spannungsproportionale Auslenkung in Meßrichtung gezwungen wird, und mit einer der federelastischen Führung zugeordneten Spannungsanzeigeskala zum Anzeigen des Spannungszustandes des ausgelenkten Gurtbandes.

Eine Vorrichtung der eingangs beschriebenen Ausführungsform ist durch die DE-PS 41 00 245 bekannt geworden. Diese sieht ein Basisgehäuse mit U-Querschnitt vor, wobei die ortsfesten Führungen als zwischen den Seitenwänden des Gehäuses angeordnete Führungsbolzen ausgebildet sind. Die federelastische Führung ist in den Seitenwänden des Gehäuses geführt, wobei schließlich ein Führungsbolzen als Kupplungselement zum Anschluß einer Ratsche oder dergleichen Spannelement ausgebildet ist. Hierdurch wird insgesamt eine einfache, funktionsgerechte und kompakte Bauweise erreicht. Außerdem läßt sich eine sichere Gurtaufnahme gewährleisten und die bekannte Vorrichtung kann unschwer mit einer Spannvorrichtung wie eine Ratsche kombiniert werden. Die vorbeschriebene Gurtspannungsmeßvorrichtung hat sich an sich bewährt, ist jedoch in konstruktiver Hinsicht und in bezug auf die Einschlaufbarkeit verbesserungsfähig. Dies gilt auch im Hinblick auf die Fertigungskosten, eine einfache Bedienung und die erreichbare Sicherheit.

Der Erfindung liegt das technische Problem zugrunde, eine Vorrichtung der eingangs beschriebenen Ausführungsform so weiter auszubilden, daß die Fertigungskosten reduziert sind, die Vorrichtung praktisch überall einschlaufbar ist, die Bedienung erleichtert und gleichzeitig die Sicherheit erhöht wird.

Zur Lösung dieser Aufgabe schlägt die Erfindung bei einer gattungsgemäßen Vorrichtung zum Erfassen der Bandspannung eines Gurtbandes, insbesondere Zurrgurtes, vor, daß die federelastische Führung als im wesentlichen in Meßrichtung in ein Stempelgehäuse eintauchender Auslenkstempel ausgebildet ist, welcher mit vorgegebenem Hub - in Meßrichtung aus einer Ruhestellung in eine Meßstellung überführbar ist.

Nach bevorzugter Ausführungsform ist die Feder zwischen einem den Hub übertragenden Anschlag und einer Basis des Auslenkstempels gehalten und in Meßstellung nach Maßgabe des Spannungszustandes des Gurtbandes unter Verringerung des Abstandes zwischen Basis und Anschlag sowie unter zunehmender Eintauchtiefe des Auslenkstempels in das Stempelgehäuse komprimierbar, wobei die Eintauchtiefe des Auslenkstempels mittels der Spannungsanzeigeskala erfaßbar ist. Nach bevorzugter Ausführungsform ist das Stempelgehäuse als rohrartiges Quadergehäuse ausgebildet, welches eine Eintauchöffnung für den Auslenkstempel im Basisgehäuse in Form eines hochstehenden Kragens umgibt. Ferner ist das Basisgehäuse im allgemeinen als im Querschnitt liegende L-förmige Halteplatte mit oberhalb des Gurtbandes in Bandlängsrichtung angeordnetem Bandschenkel und sich im wesentlichen in Meßrichtung unterseitig des Bandschenkels erstreckenden Führungsschenkel ausgebildet, wobei das Stempelgehäuse auf dem Bandschenkel aufsteht, und wobei die ortsfesten Führungen mit oberseitig aufliegendem Gurtband an den Führungsschenkel eingeschlossen sind.

Der Auslenkstempel kann als an den Innenquerschnitt des Stempelgehäuses angepaßter, kopfseitig offener, quaderförmiger Schaft mit fußseitiger Basis ausgeführt sein. Tatsächlich wird man die Basis als den Schaft außenrandseitig überragende Führungsplatte mit in Bandlängsrichtung jeweils hochgezogenen Kanten ausbilden. Zur sicheren Führung der Feder zwischen Anschlag und Basis bzw. Führungsplatte ist weiter beabsichtigt, daß die Feder im Auslenkstempel auf der Führungsplatte aufstehend angeordnet ist und eine an den Innenquerschnitt des Auslenkstempels angepaßten Federdurchmesser aufweist. Hierdurch wird die Feder gleichsam eingehaust, so daß die Sicherheit insgesamt erhöht wird. Denn es besteht nun nicht mehr die Gefahr, daß die Feder sich insgesamt lösen und aus dem Basisgehäuse wegspringen kann.

Darüber hinaus sieht eine bevorzugte Ausführungsform vor, daß der Anschlag als das Stempelgehäuse und den Schaft durchdringender Federbolzen ausgebildet ist, welcher an einen Schwenkhebel zur Einstellung des Hubes angeschlossen ist. Schließlich können praktisch sämtlich vorgenannten Bauteile, d.h. das Basisgehäuse, das Stempelgehäuse, der Auslenkstempel und damit der Schaft und die Führungsplatte sowie der Schwenkhebel insgesamt als Stanz- und/oder Biegeteile ausgeführt sein.

Durch diese Maßnahmen der Erfindung wird zunächst einmal eine Verringerung der Fertigungskosten erreicht. Denn durch die durchgehende Verwendung von Stanz- und/oder Biegeteilen sowie (verschraubbaren) Bolzen kann auf kostspielige Fügeverfahren, wie z.B. Schweißen, verzichtet werden. Die erfindungsgemäße Vorrichtung läßt sich gleichsam zusammenstecken und ist sofort betriebsbereit. Im übrigen kann das erfindungsgemäße Vorspannmeßgerät bzw. die Vorrichtung nach der Erfindung - und dieser Tatsache kommt besondere Bedeutung zu - praktisch überall eingeschlauft werden. Es handelt sich folglich um ein selbständiges abnehmbares Vorspannmeßgerät, welches nicht fest mit einer Ratsche o.dgl. Zurrmittel verbunden ist. Die Bandspannung eines Gurtbandes, insbesondere Zurrgurtes kann bei gespanntem Gurtband - ohne vorheriges Lösen der Spannung - praktisch an jeder Stelle ermittelt werden. Dies gilt auch für die Überprüfung verschiedener Gurtbänder bzw. Zurrgurte. Insgesamt ist nur ein einziges erfindungsgemäßes Vorspannmeßgerät bei einer Verzurrung unter Verwendung mehrerer Gurtbänder bzw. Zurrgurte von Nöten. Dies führt zu einer nochmaligen Kostenreduzierung.

Unabhängig davon ist die Bedienung insofern erleichtert, als eine Spannungsmessung problemlos und schnell erfolgen kann. Hierzu ist es lediglich erforderlich, das Basisgehäuse bzw. die L-förmige Halteplatte so anzuordnen, daß sich der Bandschenkel oberhalb des Gurtbandes in Bandlängsrichtung befindet und das Gurtband oberseitig auf den ortsfesten Führungen aufliegt. Der Auslenkstempel bzw. die federelastische Führung liegt hierbei nicht am Gurtband an. Dieser Status repräsentiert die Ruhestellung des in das Stempelgehäuse eintauchenden Auslenkstempels. Wenn dieser mit vorgegebenem Hub in Meßrichtung aus der vorgenannten Ruhestellung in seine Meßstellung überführt wird, legt sich der Auslenkstempel mit seiner Basis gegen die Flachseite des Gurtbandes an. Folglich wird das Gurtband aus seinem gestreckten Verlauf in eine spannungsproportionale Auslenkung gezwungen. Hierfür sorgt die wechselweise Führung seiner Flachseite über die ortsfesten Führungen und den dazwischen angeordneten Auslenkstempel. Ruhestellung meint folglich im Rahmen der Erfindung eine Stellung, bei welcher der Auslenkstempel von dem durch das Basisgehäuse geführten Gurtband beabstandet ist. In Meßstellung liegt der Auslenkstempel dagegen mit seiner Basis bzw. Führungsplatte an dem Gurtband an.

Jedenfalls wird der Auslenkstempel mit vorgegebenem Hub in Meßrichtung aus seiner Ruhestellung in die Meßstellung überführt und legt sich an das Gurtband an. Sofern das Gurtband nicht gespannt ist, wird die Feder nicht komprimiert, bleibt folglich der Abstand zwischen Basis bzw. Führungsplatte und Anschlag gleich. Wenn jedoch das Gurtband bzw. der Zurrgurt einen bestimmten Spannungszustand aufweist, taucht der Auslenkstempel mit zunehmender Eintauchtiefe - entsprechend der Kompression der Feder - in das Stempelgehäuse ein. Diese Eintauchtiefe des Auslenkstempels läßt sich mittels der Spannungsanzeigeskala erfassen. Auf diese Weise wird insgesamt eine einfache Bedienung erreicht, denn für die Überführung des Auslenkstempels von der Ruhestellung in die Meßstellung ist es lediglich erforderlich, den vorgesehenen Schwenkhebel entsprechend zu bewegen bzw. zu schwenken. Dies kann einfach und gefahrlos vorgenommen werden.

Im Rahmen der Erfindung besteht darüber hinaus die Möglichkeit der weiteren vorteilhaften Ausgestaltung. So weisen das Stempelgehäuse und der Schaft regelmäßig zur Aufnahme des Federbolzens in Meßrichtung jeweils sich zumindest teilweise überlappende Längsschlitze auf. Diese Längsschlitze dienen folglich zur (Längs-)Führung des das Stempelgehäuse und den Schaft durchdringenden Federbolzens. Der Schwenkhebel kann mittels zumindest eines Flachschenkels an das Stempelgehäuse angelenkt sein, wobei der Flachschenkel eine Steuerkurve zur Umwandlung der Schwenkbewegung des Schwenkhebels in die Hubbewegung des Federbolzens aufweist. Im allgemeinen wird man jedoch den Schwenkhebel als U-förmigen Hebel mit Handgriff als U-Basis und zwei Flachschenkel mit jeweiliger Steuerkurve als U-Schenkel ausführen, wobei der Federbolzen unter Durchdringung des Schaftes und des Stempelgehäuses beidseitig des Stempelgehäuses in den jeweiligen Flachschenkeln geführt ist.

Endlich ist vorgesehen, daß der Schwenkhebel kopfseitig des Stempelgehäuses mittels eines durchgängigen Schwenkhebelbolzens drehbar angelenkt ist, und daß die Steuerkurve als spiralförmige Nut mit von der Ruhestellung bis zur Meßstellung gleichmäßig zunehmendem Radius im Vergleich zum als Drehpunkt ausgebildeten Schwenkhebelbolzen unter Selbsthemmung des Federbolzens in der Meßstellung ausgeführt ist. Durch diese Maßnahmen wird eine nochmalige Steigerung der Sicherheit erreicht. Denn die Ausführung der Steuerkurve als spiralförmige Nut mit Selbsthemmung in der Meßstellung bedingt, daß der Schwenkhebelbolzen gleichsam in der Meßstellung in der Steuerkurve festgeklemmt ist. Folglich kann der Schwenkhebel nicht zurückschlagen. Eine Gefährdung der Bedienungsperson ist ausgeschlossen. Hinzu kommt, daß durch die Ausbildung der Steuerkurve als spiralförmige Nut mit von der Ruhestellung bis zur Meßstellung gleichmäßig zunehmendem Radius lediglich geringe Handkräfte zum Messen erforderlich sind. Diese bleiben praktisch über den gesamten Hebeweg des Schwenkhebels nahezu konstant.

Außerdem lassen sich Fehlbedienungen durch die einfache Bauform sowie die Einhebelmechanik zuverlässig ausschließen. Denn der Schwenkhebel läßt sich praktisch nur in einer Richtung, nämlich von der Ruhestellung (des Auslenkstempels) in die Meßstellung verschwenken. Eine umgekehrte Vorgehensweise ist schon deshalb nicht möglich, weil der in Meßstellung befindliche Auslenkstempel nicht das Einschlaufen bzw. Aufsetzen der erfindungsgemäßen Vorrichtung auf ein Gurtband erlaubt. Er blockiert gleichsam das Aufstecken der L-förmigen Halteplatte.

Hinzu kommt, daß sich der Spannungszustand an der Spannungsanzeigeskala einfach und zuverlässig ablesen läßt. Die gesamte Vorrichtung ist durch seine mechanische Bauweise insgesamt unempfindlich gegenüber äußeren Einflüssen. Im übrigen ist es - im Gegensatz zum Stand der Technik - nun nicht mehr erforderlich, die Vorrichtung insgesamt für die maximale Bandspannung des Gurtbandes auszulegen. Denn es werden insgesamt keine Zugkräfte übertragen. Dies hat als weiteren positiven Effekt zur Folge, daß bei einem Ausfall eines Bauteils der erfindungsgemäßen Vorrichtung keine negativen Auswirkungen auf die Bandspannung bzw. das Gurtband zu befürchten sind. Schließlich liegt eine insgesamt kompakte Bauform vor und die Lebensdauer ist deutlich erhöht, da die erfindungsgemäße Vorrichtung lediglich zur Messung des Spannungszustandes in das Gurtband eingeschlauft wird, ansonsten jedoch geschützt aufbewahrt werden kann. Hierin sind die wesentlichen Vorteile zu sehen.

Im folgenden wird die Erfindung anhand einer lediglich ein Ausführungsbeispiel darstellenden Zeichnung näher erläutert. Es zeigen in schematischer Darstellung:
- Fig. 1: Die erfindungsgemäße Vorrichtung mit in Ruhestellung befindlichem Auslenkstempel,
- Fig. 2: den Gegenstand nach Fig. 1 in Meßstellung,
- Fig. 3: eine Seitenansicht, teilweise im Schnitt des Gegenstandes nach der Fig. 2,
- Fig. 4: eine Draufsicht auf den vorerwähnten Gegenstand, teilweise im Schnitt,
- Fig. 5: eine Ansicht in Richtung des Pfeiles A in Fig. 3, und
- Fig. 6: eine Explosionsdarstellung der für den Aufbau der erfindungsgemäßen Vorrichtung erforderlichen Bauteile.

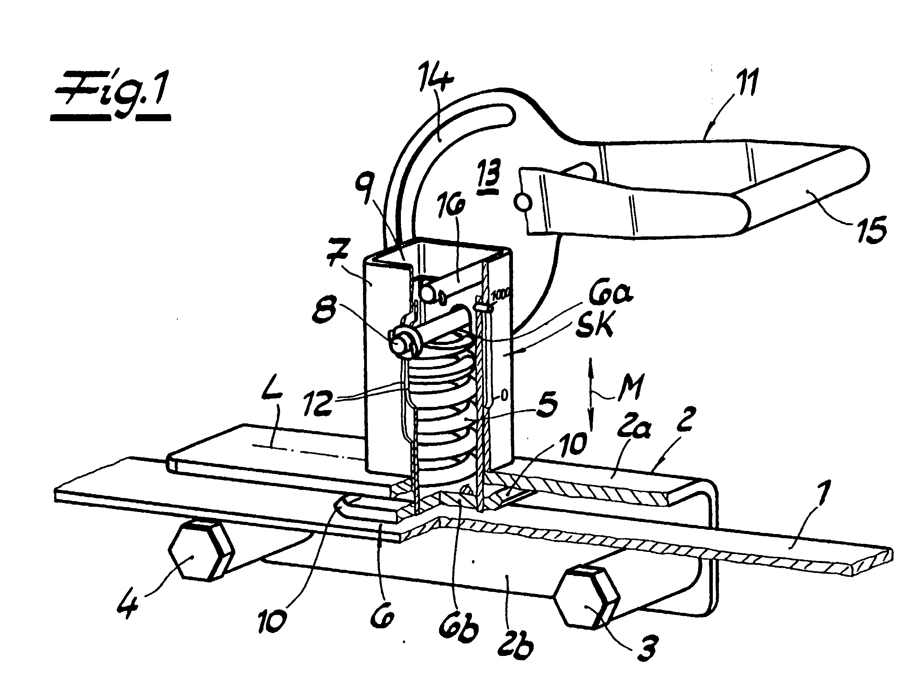

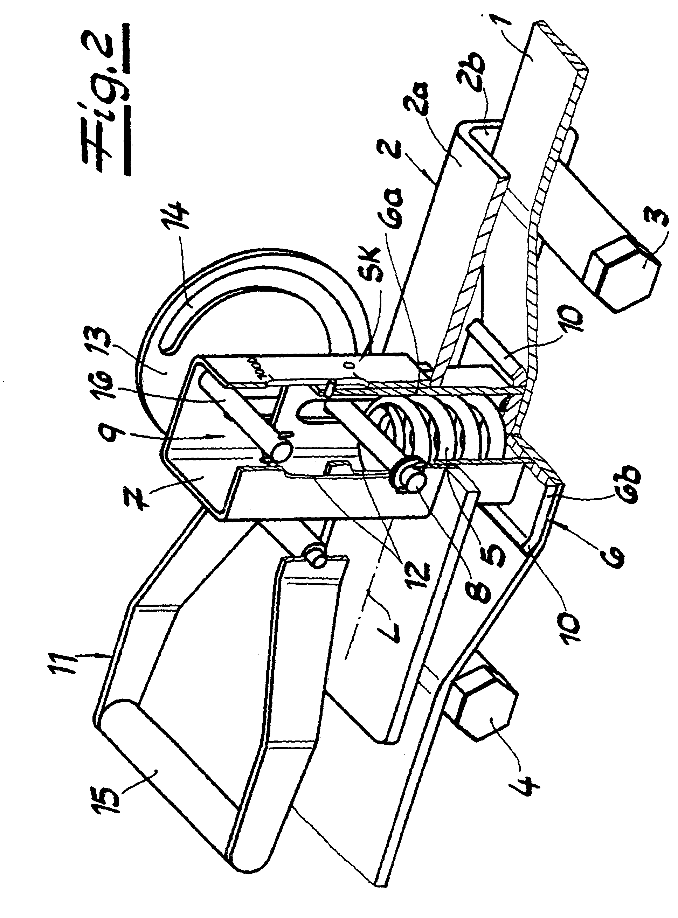

In den Figuren ist eine Vorrichtung zum Erfassen der Bandspannung eines Gurtbandes 1, insbesondere Zurrgurtes, gezeigt. Diese Vorrichtung besteht in ihrem grundsätzlichen Aufbau aus einem Basisgehäuse 2 mit quer zur Gehäuselängsachse L angeordneten Führungen 3, 4, 6 für das Gurtband 1. Zwischen zwei ortsfesten Führungen 3, 4 ist eine mittels zumindest einer Feder 5 elastisch abgestützte Führung 6 vorgesehen. Im Zuge der Messung der Bandspannung wird das mit seiner Flachseite wechselweise gegen die Führungen 3, 4, 6 anliegende Gurtband 1 auf der federelastischen Führung 6 aus seinem gestreckten Verlauf in eine spannungsproportionale Auslenkung in Meßrichtung M gezwungen. Dies macht insbesondere ein Vergleich der Fig. 1 und 2 deutlich. Zusätzlich ist eine der federelastischen Führung 6 zugeordnete Spannungsanzeigeskala SK zum Anzeigen des Spannungszustandes des ausgelenkten Gurtbandes 1 verwirklicht. Die Spannungsanzeige kann wie vorliegend mechanisch oder elektronisch in Verbindung mit beispielsweise einem Wegmeßgeber erfolgen.

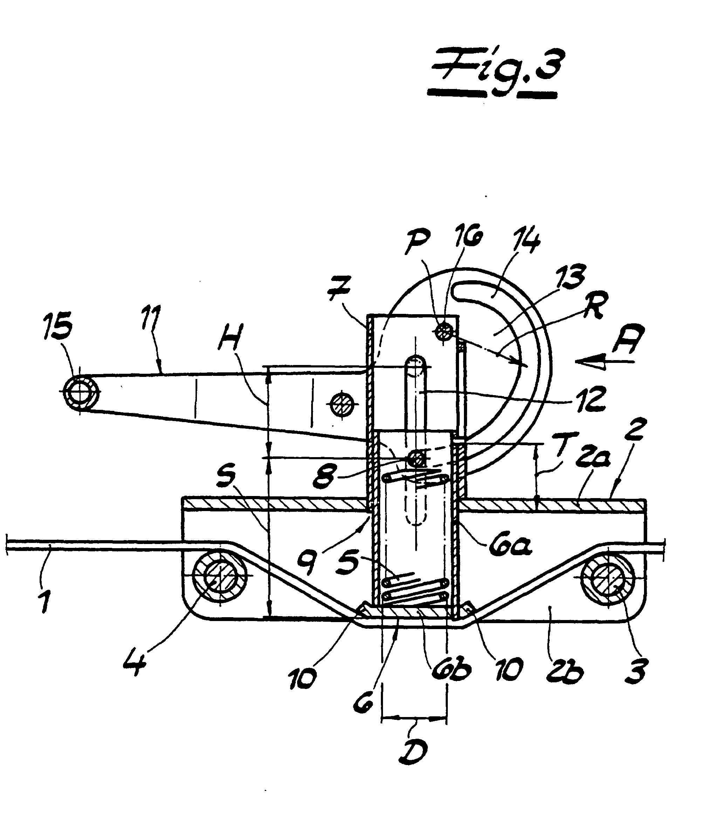

Im einzelnen ist die federelastische Führung 6 als in Meßrichtung M in ein Stempelgehäuse 7 eintauchender Auslenkstempel 6 ausgebildet, welcher mit vorgegebenem Hub H in Meßrichtung M aus einer Ruhestellung (Fig. 1) in eine Meßstellung (Fig. 2, 3) überführbar ist. Die Feder 5 ist zwischen einem den Hub H übertragenden Anschlag 8 und einer Basis 6b des Auslenkstempels 6 gehalten. Diese Feder 5 ist in Meßstellung nach Maßgabe des Spannungszustandes des Gurtbandes 1 unter Verringerung des Abstandes S zwischen Basis 6b und Anschlag 8 sowie unter zunehmender Eintauchtiefe T des Auslenkstempels 6 in das Stempelgehäuse 7 komprimierbar. Die Eintauchtiefe T des Auslenkstempels 6a ist mittels der Spannungsanzeigeskala SK erfaßbar. Die einzelnen geometrischen Verhältnisse und Abstände sind insbesondere in Fig. 3 dargestellt.

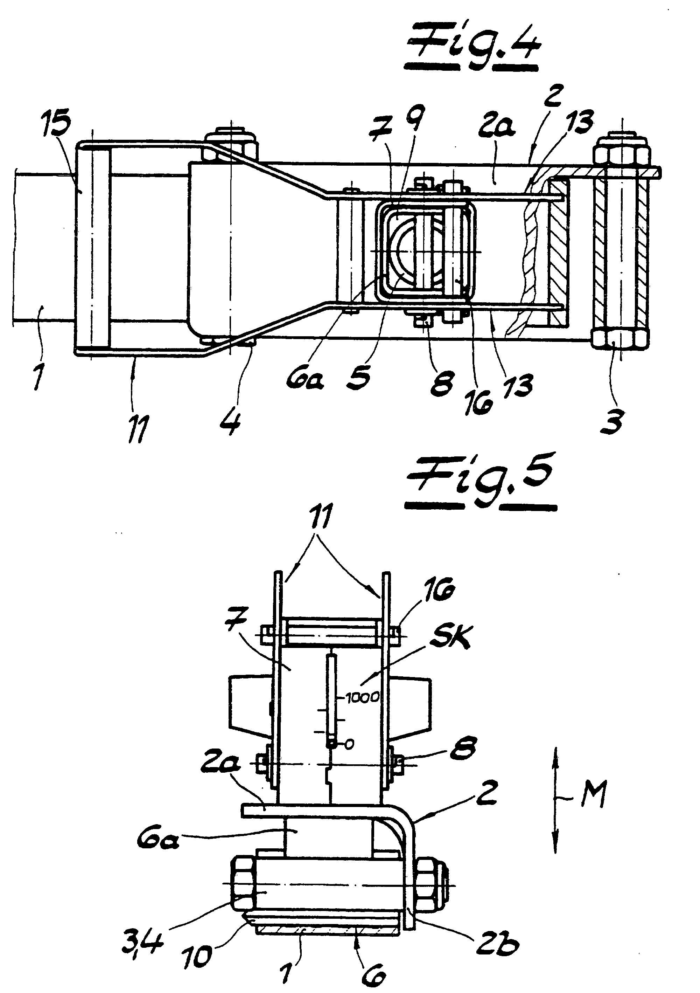

Das Stempelgehäuse 7 ist als rohrartiges Quadergehäuse ausgebildet, welches eine Eintauchöffnung 9 für den Auslenkstempel 6 im Basisgehäuse 2 in Form eines hochstehenden Kragens umgibt (vgl. Fig. 1, 2 und 4). Das Basisgehäuse 2 ist als im Querschnitt liegende L-förmige Halteplatte mit oberhalb des Gurtbandes 1 in Bandlängsrichtung (entsprechend der Gehäuselängsachse L) angeordnetem Bandschenkel 2a und sich im wesentlichen in Meßrichtung M unterseitig des Bandschenkels 2a erstreckenden Führungsschenkel 2b ausgebildet (vgl. insbesondere Fig. 5). Das Stempelgehäuse 7 steht auf dem Bandschenkel 2a auf, wobei die ortsfesten Führungen 3, 4 mit oberseitig aufliegendem Gurtband 1 an den Führungsschenkel 2b angeschlossen sind.

Der Auslenkstempel 6 ist als an den Innenquerschnitt des Stempelgehäuses 7 angepaßter, kopfseitig offener, quaderförmiger Schaft 6a mit fußseitiger Basis 6b ausgebildet. Die Basis 6b ist als den Schaft 6a außenrandseitig überragende Führungsplatte 6b mit in Bandlängsrichtung (entsprechend der Gehäuselängsachse L) jeweils hochgezogenen Kanten 10 ausgeführt. Die Kanten 10 sorgen für eine einwandfreie Führung des Gurtbandes 1 in Meßstellung (vgl. Fig. 3). Die Feder 5 ist im Auslenkstempel 6 auf der Führungsplatte 6b aufstehend angeordnet und weist eine an den Innenquerschnitt des Auslenkstempels 6 angepaßten Federdurchmesser D auf (vgl. Fig. 3).

Der Anschlag 8 ist als das Stempelgehäuse 7 und den Schaft 6a durchdringender Federbolzen 8 ausgebildet, welcher an einen Schwenkhebel 11 zur Einstellung des Hubes H angeschlossen ist. Das Stempelgehäuse 7 und der Schaft 6a weisen zur Aufnahme des Federbolzens 8 in Meßrichtung M jeweils sich zumindest teilweise überlappende Längsschlitze 12 auf. Der Schwenkhebel 11 ist mittels zumindest eines Flachschenkels 13 an das Stempelgehäuse 7 angelenkt, wobei der Flachschenkel 13 eine Steuerkurve 14 zur Umwandlung der Schwenkbewegung des Schwenkhebels 11 in die Hubbewegung des Federbolzens 8 aufweist.

Nach dem Ausführungsbeispiel ist der Schwenkhebel 11 als U-förmiger Hebel mit Handgriff 15 als U-Basis und zwei Flachschenkeln 13 mit jeweiliger Steuerkurve 14 als U-Schenkel ausgebildet. Der Federbolzen 8 ist unter Durchdringung des Auslenkstempels 6 bzw. Schaftes 6a und des Stempelgehäuses 7 beidseitig des Stempelgehäuses 7 in den jeweiligen Flachschenkeln 13 geführt. Der Schwenkhebel 11 ist kopfseitig des Stempelgehäuses 7 mittels eines Schwenkhebelbolzens 16 drehbar angelenkt, wobei die Steuerkurve 14 als spiralförmige Nut mit von der Ruhestellung bis zur Meßstellung gleichmäßig zunehmendem Radius R im Vergleich zum als Drehpunkt P ausgebildeten Schwenkhebelbolzen 16 unter Selbsthemmung des Federbolzens 8 in der Meßstellung ausgeführt ist.

Die Funktionsweise wird im folgenden beschrieben. Ausweislich der in Fig. 1 dargestellten Ruhestellung der erfindungsgemäßen Vorrichtung bzw. des Auslenkstempels 6 läßt sich die gesamte Vorrichtung auf das Gurtband 1 aufstecken. Dabei ist das Basisgehäuse 2 bzw. die L-förmige Halteplatte so angeordnet, daß deren Gehäuselängsachse L im wesentlichen mit der Bandlängsrichtung übereinstimmt. Die Feder 5 ist innerhalb des Stempelgehäuses 6 sicher gehalten und stützt sich zwischen Anschlag 8 und Basis bzw. Führungsplatte 6b ab.

Um den Auslenkstempel 6 in die in Fig. 2 gezeigte Meßstellung zu überführen, wird der Schwenkhebel 11 um ca. 180° entgegen dem Uhrzeigersinn verschwenkt. Gleichzeitig wandert der in den beiden Flachschenkeln 13 gehaltene, das Stempelgehäuse 7 sowie den Auslenkstempel 6 durchdringende Federbolzen 8 - geführt durch die jeweilige Steuerkurve 14 - in den Längsschlitzen 12 abwärts und überstreicht insgesamt den in Fig. 3 dargestellten Hub H. Nachdem der Hub H vom Federbolzen 8 überstrichen worden ist, befindet sich der Auslenkstempel 6 in Meßstellung. Je nach Spannungszustandes des Gurtbandes 1 wird die Feder 5 mehr oder minder komprimiert. Dies bedingt eine entsprechende Verringerung des Abstandes S zwischen Basis bzw. Führungsplatte 6b und Anschlag bzw. Federbolzen 8 (vgl. Fig. 3). Einhergehend hiermit ändert sich die Eintauchtiefe T des Auslenkstempels 6 in das Stempelgehäuse 7. Ist die Spannung im Gurtband 1 gering, so liegt ein relativ großer Abstand S vor und der Auslenkstempel 6 taucht kaum in das Stempelgehäuse 7 ein. Bei hoher Gurtspannung wird jedoch die Feder 5 mehr komprimiert und demzufolge der Auslenkstempel 6 in Fig. 3 weiter nach oben gedrückt. In dieser Stellung läßt sich die Spannungsanzeigeskala SK zum Anzeigen des Spannungszustandes des ausgelenkten Gurtbandes 1 ablesen. Folglich korrespondieren geringe Spannungswerte zu den in Fig. 5 dargestellten unteren Skalenwerten, während hohe Spannungen zu oberen Skalenwerten korrespondieren. Selbstverständlich sind die Verhältnisse umgekehrt, falls die gesamte Vorrichtung nach Fig. 3 um 180° gedreht wird. Dies hängt von der jeweiligen Einbaulage des zu messenden Gurtbandes 1 ab.

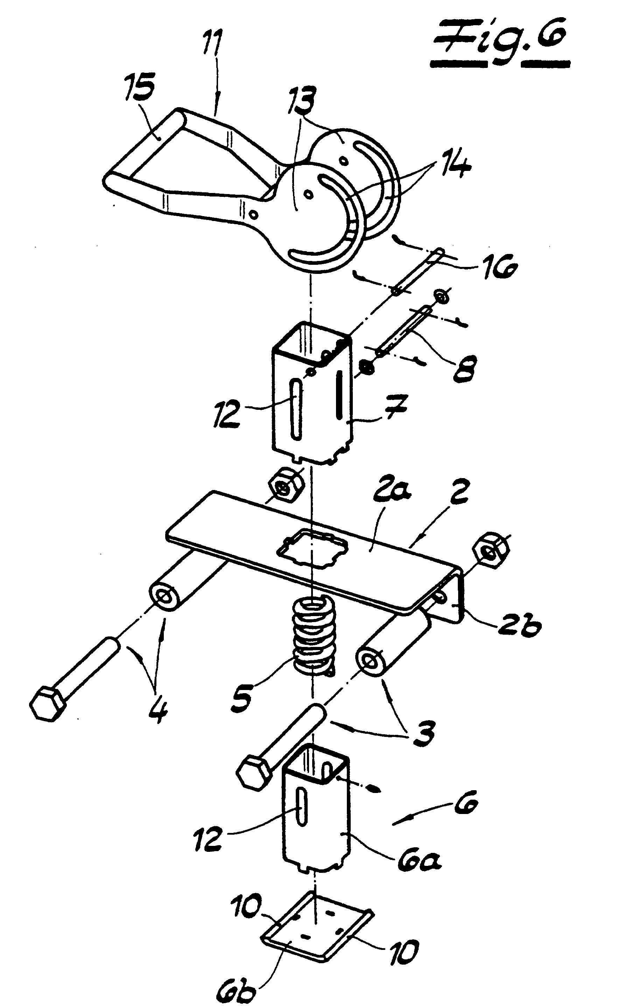

Die Fig. 6 macht deutlich, daß die gesamte erfindungsgemäße Vorrichtung aus einfach und schnell herzustellenden Stanz- und/oder Biegeteilen in Verbindung mit Schraubenbolzen herstellbar ist. Im einzelnen sind das Basisgehäuse 2, das Stempelgehäuse 7, der Auslenkstempel 6 und damit der Schaft 6a und die Führungsplatte 6b sowie der Schwenkhebel 11 insgesamt als Stanz- und/oder Biegeteile ausgeführt. Hierdurch werden nicht nur die Fertigungs- sondern auch die Montagekosten deutlich reduziert. Denn auf kostspielige Fügeverfahren, wie z.B. Schweißungen, kann verzichtet werden. Das erfindungsgemäße Gurtspannmeßgerät läßt sich praktisch an jeder Stelle des Gurtbandes 1 ansetzen. Die Bedienung ist einfach und sicher, weil der Federbolzen 8 in seiner zur Meßstellung korrespondierenden Endstellung in der Steuerkurve 14 (vgl. Fig. 2 und 3) mit Selbsthemmung in der Steuerkurve 14 bzw. der spiralförmigen Nut gehalten wird. Ein Zurückschlagen des Schwenkhebels 11 kann folglich nicht auftreten. Im übrigen sind Fehlbedienungen ausgeschlossen, weil die erfindungsgemäße Vorrichtung lediglich in der in Fig. 1 dargestellten Stellung des Schwenkhebels 11 (Ruhestellung) auf das Gurtband 1 aufgesteckt werden kann. Für den Fall, daß sich der Schwenkhebel 11 in der in Fig. 2 gezeigten Meßstellung befindet, blockiert der Auslenkstempel 6 gleichsam das Einschlaufen, wie ein Vergleich mit der Fig. 3 unmittelbar deutlich macht.

## Patentansprüche

1. Vorrichtung zum Erfassen der Bandspannung eines Gurtbandes (1), insbesondere Zurrgurtes, mit einem Basisgehäuse (2) mit quer zur Gehäuselängsachse (L) angeordneten Führungen (3, 4, 6) für das Gurtband (1), wobei zwischen zwei ortsfesten Führungen (3, 4) eine mittels zumindest einer Feder (5) elastisch abgestützte Führung (6) vorgesehen ist, und wobei im Zuge der Messung der Bandspannung das mit seiner Flachseite wechselweise gegen die Führungen (3, 4, 6) anliegende Gurtband (1) auf der federelastischen Führung (6) aus seinem gestreckten Verlauf in eine spannungsproportionale Auslenkung in Meßrichtung (M) gezwungen wird, und mit einer der federelastischen Führung (6) zugeordneten Spannungsanzeigeskala (SK) zum Anzeigen des Spannungszustandes des ausgelenkten Gurtbandes (1), **dadurch gekennzeichnet, daß**
die federelastische Führung (6) als im wesentlichen in Meßrichtung (M) in ein Stempelgehäuse (7) eintauchender Auslenkstempel (6) ausgebildet ist, welcher mit vorgegebenem Hub (H) aus einer Ruhestellung in eine Meßstellung überführbar ist.

2. Vorrichtung nach Anspruch 1, **dadurch gekennzeichnet, daß** die Feder (5) zwischen einem den Hub (H) übertragenden Anschlag (8) und einer Basis (6b) des Auslenkstempels (6) gehalten und in Meßstellung nach Maßgabe des Spannungszustandes des Gurtbandes (1) unter Verringerung des Abstandes (S) zwischen Basis (6b) und Anschlag (8) sowie unter zunehmender Eintauchtiefe (T) des Auslenkstempels (6) in das Stempelgehäuse (7) komprimierbar ist, wobei die Eintauchtiefe (T) des Auslenkstempels (6) mittels der Spannungsanzeigeskala (SK) erfaßbar ist.

3. Vorrichtung nach Anspruch 1 oder 2, **dadurch gekennzeichnet, daß** das Stempelgehäuse (7) als rohrartiges Quadergehäuse ausgebildet ist, welches eine Eintauchöffnung (9) für den Auslenkstempel (6) im Basisgehäuse (2) in Form eines hochstehenden Kragens umgibt.

4. Vorrichtung nach einem der Ansprüche 1 bis 3, **dadurch gekennzeichnet, daß** das Basisgehäuse (2) als im Querschnitt liegende L-förmige Halteplatte mit oberhalb des Gurtbandes (1) in Bandlängsrichtung angeordnetem Bandschenkel (2a) und sich im wesentlichen in Meßrichtung (M) unterseitig des Bandschenkels (2a) erstreckenden Führungsschenkel (2b) ausgebildet ist, wobei das Stempelgehäuse (7) auf dem Bandschenkel (2a) aufsteht, und wobei die ortsfesten Führungen (3) mit dem oberseitig aufliegenden Gurtband (1) an den Führungsschenkel (2b) angeschlossen sind.

5. Vorrichtung nach einem der Ansprüche 1 bis 4, **dadurch gekennzeichnet, daß** der Auslenkstempel (6) als an den Innenquerschnitt des Stempelgehäuses (7) anpaßbarer, kopfseitiger offener, quaderförmiger Schaft (6a) mit fußseitiger Basis (6b) ausgebildet ist.

6. Vorrichtung nach einem der Ansprüche 1 bis 5, **dadurch gekennzeichnet, daß** die Basis (6b) als den Schaft (6a) außenseitig überragende Führungsplatte (6b) mit in Bandlängsrichtung jeweils hochgezogenen Kanten (10) ausgeführt ist.

7. Vorrichtung nach einem der Ansprüche 1 bis 6 , **dadurch gekennzeichnet, daß** die Feder (5) im Auslenkstempel (6) auf der Führungsplatte (6b) aufstehend angeordnet ist und eine an den Innenquerschnitt des Auslenkstempels (6) angepaßten Federdurchmesser (D) aufweist.

8. Vorrichtung nach einem der Ansprüche 1 bis 7, **dadurch gekennzeichnet, daß** der Anschlag (8) als das Stempelgehäuse (7) und den Schaft (6a) durchdringender Federbolzen (8) ausgebildet ist, welcher an einen Schwenkhebel (11) zur Einstellung des Hubs (H) angeschlossen ist.

9. Vorrichtung nach einem der Ansprüche 1 bis 8, **dadurch gekennzeichnet, daß** das Stempelgehäuse (7) und der Schaft (6a) zur Aufnahme des Federbolzens (8) in Meßrichtung (M) jeweils sich zumindest teilweise überlappende Längsschlitze (12) aufweisen.

10. Vorrichtung nach einem der Ansprüche 1 bis 9, **dadurch gekennzeichnet, daß** der Schwenkhebel (11) mittels zumindest eines Flachschenkels (13) an das Stempelgehäuse (7) angelenkt ist, wobei der Flachschenkel (13) eine Steuerkurve (14) zur Umwandlung der Schwenkbewegung des Schwenkhebels (11) in die Hubbewegung des Federbolzens (8) aufweist.

11. Vorrichtung nach einem der Ansprüche 1 bis 10, **dadurch gekennzeichnet, daß** der Schwenkhebel (11) als U-förmiger Hebel mit Handgriff (15) als U-Basis und zwei Flachschenkel (13) mit jeweiliger Steuerkurve (14) als U-Schenkel ausgeführt ist, wobei der Federbolzen (8) unter Durchdringung des Schaftes (6a) und des Stempelgehäuses (7) beidseitig des Stempelgehäuses (7) in den jeweiligen Flachschenkeln (13) geführt ist.

12. Vorrichtung nach einem der Ansprüche 1 bis 11, **dadurch gekennzeichnet, daß** der Schwenkhebel (11) kopfseitig des Stempelgehäuses (7) mittels eines Schwenkhebelbolzens (16) drehbar angelenkt ist, und daß die Steuerkurve (14) als spiralförmige Nut mit von der Ruhestellung bis zu Meßstellung zunehmendem Radius (R) im Vergleich zum als Drehpunkt (P) ausgebildeten Schwenkhebelbolzen (16) unter Selbsthemmung des Federbolzens (8) in der Meßstellung ausgeführt ist.

13. Vorrichtung nach einem der Ansprüche 1 bis 12, **dadurch gekennzeichnet, daß** das Basisgehäuse (2), das Stempelgehäuse (7), der Auslenkstempel (6) und damit der Schaft (6a) und die Führungsplatte (6b) sowie der Schwenkhebel (11) insgesamt als Stanz- und/oder Biegestelle ausgeführt sind.

## Claims

1. A device for determining the tension of a band-shaped belt (1), in particular, a lashing strap, with a base housing (2) that contains guides (3, 4, 6) for the belt (1) which are arranged transverse to the longitudinal axis (L) of the housing, wherein a guide (6) that is elastically supported by means of at least one spring (5) is provided between two stationary guides (3, 4), and wherein the belt (1) that alternately adjoins the guides (3, 4, 6) with its flat side is deflected in the measuring direction (M) from its stretched state on the elastically supported guide (6) during the course of the measurement, namely by a distance that is proportional to the tension, and with a tension indicator scale (SK) that is assigned to the elastically supported guide (6) and serves for indicating the state of tension of the deflected belt (1),
**characterized in that**
the elastically supported guide (6) is essentially realized in the form of a deflecting plunger (6) that is inserted into a plunger housing (7) in the measuring direction (M) and can be transferred from an idle position into a measuring position with a predetermined stroke (H).

2. The device according to Claim 1, **characterized in that** the spring (5) is held between a limit stop (8) that transmits the stroke (H) and a base (6b) of the deflecting plunger (6), wherein said spring can be compressed in the measuring position in accordance with the state of tension of the belt (1), namely such that the distance (S) between the base (6b) and the limit stop (8) is simultaneously reduced and the depth of insertion (T) of the deflecting plunger (6) in the plunger housing (7) is simultaneously increased, and wherein the depth of insertion (T) of the deflecting plunger (6) can be determined by means of the tension indicator scale (SK).

3. The device according to Claim 1 or 2, **characterized in that** the plunger housing (7) is realized in the form of a tubular cuboid housing that encompasses an insertion opening (9) for the deflecting plunger (6) in the base housing (2) which is realized in the form of a raised collar.

4. The device according to one of Claims 1-3, **characterized in that** the base housing (2) is realized in the form of a holding plate with a cross section that resembles a horizontally positioned L with a belt limb (2a) that is arranged above the belt (1) in the longitudinal direction thereof and a guide limb (2b) that essentially extends in the measuring direction (M) underneath the belt limb (2a), wherein the plunger housing (7) stands on the belt limb (2a), and wherein the stationary guides (3) with the belt (1) lying thereon are connected to the guide limb (2b).

5. The device according to one of Claims 1-4, **characterized in that** the deflecting plunger (6) is realized in the form of a cuboid shaft (6a) that is adapted to the inside cross section of the plunger housing (7), wherein said shaft is open on the upper side and provided with a base (6b) on the bottom side.

6. The device according to one of Claims 1-5, **characterized in that** the base (6b) is realized in the form of a guide plate (6b) that protrudes over the outside of the shaft (6a) and is provided with edges (10) that are respectively raised in the longitudinal direction of the belt.

7. The device according to one of Claims 1-6, **characterized in that** the spring (5) is arranged upright in the deflecting plunger (6) on the guide plate (6b), and **in that** the spring has a diameter (D) that is adapted to the inside cross section of the deflecting plunger (6).

8. The device according to one of Claims 1-7, **characterized in that** the limit stop (8) is realized in the form of a spring bolt (8) that penetrates the plunger housing (7) and the shaft (6a), wherein said spring bolt is connected to a pivoted lever (11) for adjusting the stroke (H).

9. The device according to one of Claims 1-8, **characterized in that** the plunger housing (7) and the shaft (6a) are respectively provided with longitudinal slots (12) that extend in the measuring direction (M) and at least partially overlap one another in order to accommodate the spring bolt (8).

10. The device according to one of Claims 1-9, **characterized in that** the pivoted lever (11) is coupled to the plunger housing (7) with at least one flat limb (13), wherein the flat limb (13) is provided with a radial cam (14) in order to transform the pivoting movement of the pivoted lever (11) into the stroke of the spring bolt (8).

11. The device according to one of Claims 1-10, **characterized in that** the pivoted lever (11) consists of a U-shaped lever, wherein the base of the U is realized in the form of a handle (15) and the limbs of the U are realized in the form of two flat limbs (13) that are respectively provided with a radial cam (14), and wherein the spring bolt (8) penetrates the shaft (6a) and the plunger housing (7) and is guided in the respective flat limbs (13) to both sides of the plunger housing (7).

12. The device according to one of Claims 1-11, **characterized in that** the pivoted lever (11) is coupled in a pivoted fashion to the upper side of the plunger housing (7) by means of a lever bolt (16), and **in that** the radial cam (14) is realized in the form of a spiral groove with a radius (R) that, referred to the fulcrum (P) in the form of the lever bolt (16), increases from the idle position to the measuring position and causes the spring bolt (8) to be automatically locked in the measuring position.

13. The device according to one of Claims 1-12, **characterized in that** the base housing (2), the plunger housing (7), the deflecting plunger (6) and consequently the shaft (6a), as well as the guide plate (6b) and the pivoted lever (11), are realized in the form of punching and/or bending points.

## Revendications

1. Dispositif d'enregistrement de la tension de bande d'une bande de sangle (1), notamment une sangle d'amarrage, comportant un boîtier de base (2) avec des guides (3, 4, 6) pour la bande de sangle (1) disposés transversalement par rapport à l'axe longitudinal du boîtier (L), un guide (6) soutenu élastiquement au moyen d'au moins un ressort (5) étant prévu entre deux guides (3, 4) à emplacement fixe, et la bande de sangle (1) reposant alternativement par son côté plat contre les guides (3, 4, 6) au cours de la mesure de la tension de bande étant, sur le guide à élasticité de ressort (6), forcée de passer de son orientation étirée à une déviation proportionnelle à la tension dans le sens de mesure (M), et une échelle d'affichage de tension (SK) associée à un des guides à élasticité de ressort (6) pour afficher l'état de tension de la bande de sangle déviée (1),
**caractérisé en ce que**
le guide à élasticité de ressort (6) est conçu comme un tampon de déviation (6) plongeant substantiellement, dans le sens de mesure (M), dans un boîtier de tampon (7) et qui est permutable par une élévation prédéfinie (H) d'une position de repos à une position de mesure.

2. Dispositif selon la revendication 1, **caractérisé en ce que** le ressort (5) est maintenu entre une butée (8) transférant l'élévation (H) et une base (6b) du tampon de déviation (6) et est comprimable en position de mesure en fonction de l'état de tension de la bande de sangle (1) en diminuant la distance (S) entre la base (6b) et la butée (8) ainsi que sous une profondeur de plongée croissante (T) du tampon de déviation (6) dans le boîtier du tampon (7), la profondeur de plongée (T) du tampon de déviation (6) étant enregistrable au moyen de l'échelle d'affichage de tension (SK).

3. Dispositif selon la revendication 1 ou 2, **caractérisé en ce que** le boîtier de tampon (7) est conçu sous forme d'un boîtier parallélépipédique de type tubulaire qui entoure un orifice de plongée (9) pour le tampon de déviation (6) dans le boîtier de base (2) sous forme d'un collet placé en hauteur.

4. Dispositif selon l'une quelconque des revendications 1 à 3, **caractérisé en ce que** le boîtier de base (2) est conçu sous forme d'une plaque de maintien en forme de L étendue dans la section transversale et comportant une branche de bande (2a) disposée au dessus de la bande de sangle (1) dans le sens longitudinal de la bande et de branches de guidage (2b) s'étendant substantiellement dans le sens de mesure (M) sur la face inférieure de la branche de bande (2a), le boîtier de tampon (7) se dressant sur la branche de bande (2a), et les guides à emplacement fixe (3) étant raccordés à la bande de sangle (1) reposant sur la face supérieure sur les branches de guidage (2b).

5. Dispositif selon l'une quelconque des revendications 1 à 4, **caractérisé en ce que** le tampon de déviation (6) est conçu sous forme d'une tige parallélépipédique (6a) ayant une base (6b) du côté du pied, adaptable à la section transversale intérieure du boîtier de tampon (7) et ouverte du côté du sommet.

6. Dispositif selon l'une quelconque des revendications 1 à 5, **caractérisé en ce que** la base (6b) est réalisée sous forme d'une plaque de guidage (6b) dépassant de la tige (6a) du côté extérieur avec des arêtes (10) respectivement relevées dans le sens longitudinal de la bande.

7. Dispositif selon l'une quelconque des revendications 1 à 6, **caractérisé en ce que** le ressort (5) est disposé verticalement dans le tampon de déviation (6) sur la plaque de guidage (6b) et présente un diamètre de ressort (D) adapté à la section transversale intérieure du tampon de déviation (6).

8. Dispositif selon l'une quelconque des revendications 1 à 7, **caractérisé en ce que** la butée (8) est conçue sous forme d'un boulon à ressort (8) traversant le boîtier du tampon (7) et la tige (6a), qui est raccordé à un levier pivotant (11) servant à régler l'élévation (H).

9. Dispositif selon l'une quelconque des revendications 1 à 8, **caractérisé en ce que** le boîtier de tampon (7) et la tige (6a) présentent, afin de recevoir le boulon à ressort (8), dans le sens de mesure (M) respectivement des fentes longitudinales (12) se recouvrant du moins partiellement.

10. Dispositif selon l'une quelconque des revendications 1 à 9, **caractérisé en ce que** le levier pivotant (11) est articulé au moyen d'au moins une branche plate (13) au boîtier de tampon (7), la branche plate (13) présentant une courbe de commande (14) pour transformer le mouvement de pivotement du levier pivotant (11) en un mouvement d'élévation du boulon à ressort (8).

11. Dispositif selon l'une quelconque des revendications 1 à 10, **caractérisé en ce que** le levier pivotant (11) est réalisé sous forme d'un levier en forme de U à poignée (15) formant la base du U et de deux branches plates (13) à courbe de commande respective (14) formant les branches du U, le boulon à ressort (8) étant guidé en traversant la tige (6a) et le boîtier de tampon (7) étant guidé des deux côtés du boîtier de tampon (7) dans les branches plates (13) respectives.

12. Dispositif selon l'une quelconque des revendications 1 à 11, **caractérisé en ce que** le levier pivotant (11) est articulé en rotation du côté du sommet du boîtier de tampon (7) au moyen d'un boulon de levier pivotant (16), et que la courbe de commande (14) est réalisée sous forme d'une rainure en forme de spirale d'un rayon (R) croissant de la position de repos jusqu'à la position de mesure comparativement au boulon de levier pivotant (16) représentant le point de rotation (P) avec un autoblocage du boulon à ressort (8) dans la position de mesure.

13. Dispositif selon l'une quelconque des revendications 1 à 12, **caractérisé en ce que** le boîtier de base (2), le boîtier du tampon (7), le tampon de déviation (6) et donc la tige (6a) et la plaque de guidage (6b) ainsi que le levier pivotant (11) sont réalisés globalement comme un point de découpe et/ou de cintrage.
